(19) Europäisches Patentamt
European Patent Office
Office européen des brevets

(11) **EP 3 100 457 B1**

(12) **EUROPEAN PATENT SPECIFICATION**

(45) Date of publication and mention
of the grant of the patent:
**07.03.2018 Bulletin 2018/10**

(21) Application number: **14706376.2**

(22) Date of filing: **31.01.2014**

(51) Int Cl.:
***H04N 21/414*** *(2011.01)*    ***H04N 21/43*** *(2011.01)*

(86) International application number:
**PCT/US2014/014153**

(87) International publication number:
**WO 2015/116164 (06.08.2015 Gazette 2015/31)**

(54) **METHOD AND APPARATUS FOR SYNCHRONIZING PLAYBACKS AT TWO ELECTRONIC DEVICES**

VERFAHREN UND VORRICHTUNG ZUR SYNCHRONISIERUNG VON ABSPIELUNGEN AUF ZWEI ELEKTRONISCHEN VORRICHTUNGEN

PROCÉDÉ ET APPAREIL DE SYNCHRONISATION DE LECTURES AU NIVEAU DE DEUX DISPOSITIFS ÉLECTRONIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.12.2016 Bulletin 2016/49**

(73) Proprietor: **Thomson Licensing
92130 Issy-les-Moulineaux (FR)**

(72) Inventor: **STEWART, John Sidney
Indianapolis, Indiana 46278 (US)**

(74) Representative: **Huchet, Anne
TECHNICOLOR
1-5, rue Jeanne d'Arc
92130 Issy-les-Moulineaux (FR)**

(56) References cited:
**WO-A2-2012/049223    CN-A- 103 237 203
US-B1- 8 640 181**

**Description**

**BACKGROUND OF THE INVENTION**

**Field of the Invention**

The present principles of the embodiments generally relate to a method and apparatus for synchronizing playbacks of two electronic devices and more particularly synchronizing playback of a video and a first audio associated with the video at one of the two electronic devices and playback of a second audio, different from the first audio and associated with the video, at the other electronic device.

**Background Information**

Multiple ways, such as broadband television (TV) and mobile TV, coexist today to bring multimedia steams or broadcast programs to end users. With broadband TV, the receiver is usually a standard TV device, connected to a receiving device, called a Set-Top Box or STB. With mobile TV, the receiver device is a mobile terminal such as a mobile phone, a Personal Digital Assistant (PDA), or a tablet.

In a MPEG-2 stream, several components, e. g. audio, video, are synchronized between each other in order to be rendered at the proper time. This is called inter-component synchronization. A common example is the lip synchronization, noted lip-sync, which provides the audio at the exact same time as the lips of the person move on the corresponding video. Such synchronization is typically achieved using specific time stamps. In MPEG-2 streams, the Presentation Time Stamp, or PTS, ensures such synchronization. The PTS of the audio sample indicates its presentation time, in reference to the internal clock (which is set thanks to the Program Clock Reference or PCR also contained in the MPEG-2 stream); in the same way, the PTS of the video sample indicates its presentation time, also in reference to the same internal clock.

However, when two electronic devices respectively receiving a video stream and an audio stream, the synchronization between the respective playbacks cannot be achieved easily. Accordingly, there is a need for a method and apparatus for synchronizing audio and video respectively received by two different receiving devices. The present invention addresses these and/or

WO-A2-2012/049223 discloses a method for synchronizing an alternative audio stream to a video stream using watermarks.

**SUMMARY OF THE INVENTION**

In accordance with an aspect of the present invention, a method for synchronizing playback of a program including a video and associated first audio at a first electronic device with playback of a second audio associated with the program at a second electronic device that also receives the video is disclosed. The method comprises decoding, by a video decoder in the second electronic device, the video, and outputting the decoded video; decoding, by an audio decoder in the second electronic device, the second audio and outputting the decoded second audio for playing back by the second electronic device; receiving a user command to synchronize the playback of the video at the first electronic device and playback of the second audio at the second electronic device; responsive to the user command, the method further comprising capturing, by a capturing device in the second electronic device, the playback of the video at the first electronic device; determining, by the second electronic device, an offset between the outputted decoded video and the captured video; and adjusting outputting of the decoded second audio according to the offset, so that the playback of the first audio at the first electronic device is synchronized with the playback of the second audio at the second electronic device. The user command may be generated by a user activating an input mechanism.

In one embodiment, the method further comprises a step of playing back the second audio by the second electronic device from a first position, which is a first time interval away from a beginning of the program in a normal playback of the program, wherein when the playback of the second audio is at the first position, the playback of the program by the first electronic device is at a second position, which is a second time interval away from the beginning of the program in a normal playback, and wherein a difference between the first time interval and the second time interval is within a predefined interval. The method may further comprise a step of positioning the playback of the second audio to the first position responsive to a user signal.

In another embodiment, the method further comprises if the step of determining the offset fails, asking a user to input the user command again, and the steps of capturing and determining the offset are repeated.

In another embodiment, the method further comprises adjusting, by the video decoder, an output by outputting the decoded video according to the offset, so that outputs of the video decoder and the audio decoder are synchronized.

In another embodiment, the method further comprises downloading the video and the second audio to the

**EP 3 100 457 B1**

second electronic device before playing back the second audio by the second electronic device. The program received by the first electronic device, and the video and the second audio received by the second electronic device are downloaded from a first source, or respectively from a second source and the first source.

In another embodiment, the method further comprises a step of determining a presentation time stamp associated with a frame in the decoded video, which corresponds a newly captured video frame according to the offset, and adjusting playback of the second audio comprising outputting a sample in the decoded second audio associated with the determined presentation time stamp.

In another aspect of the invention, a second electronic device is disclosed. The second electronic device comprises a video decoder and an audio decoder for respectively decoding a video and a second audio received by the second electronic device and outputting the decoded video and the decoded second audio, the second audio associated with a program comprising a video and the first audio and being played back by a first electronic device; a video capturing device for capturing the video being played back by the first electronic device; a video correlator receiving the captured playback video and the decoded video from the video decoder; and a processor, wherein when the processor receives a user command to synchronize playback of the second audio at the second electronic device with the playback of the video at the first electronic device, the processor is configured to instruct the video correlator to determine an offset between the received captured video and the received decoded video outputted from the video decoder and instruct the audio decoder to output the decoded second audio according to the offset. The second electronic device may include an input mechanism for a user to input the user command.

In one embodiment, the second electronic device further comprises a video player playing back the second audio by the second electronic device from a first position, which is a first time interval away from a beginning of the program in a normal playback of the program, wherein when the playback of the second audio is at the first position, the playback of the program at the first electronic device is at a second position, which is a second time interval away from the beginning of the program in a normal playback, and wherein a difference between the first time interval and the second time interval is within a predefined interval. The video player may position the playback of the second audio to the first position responsive to a user signal.

In another embodiment, if determining the offset fails, the processor is configured to ask a user to input the user command again, and instruct the video correlator to determine the offset again.

In another embodiment, processor is configured to instruct the video decoder to adjust an output by outputting the decoded video according to the offset, so that outputs of the video decoder and the second audio decoder are synchronized.

In another embodiment, the video and the second audio are downloaded to the second electronic device before the second electronic device playing back the second audio. The program received by the first electronic device, and the video and the second audio received by the second electronic device are downloaded from a first source, or respectively from a second source and the first source.

In another embodiment, wherein the processor is configured to instruct the video correlator to determine a presentation time stamp associated with a frame in the decoded video, which corresponds a newly captured video according to the offset, and instruct the audio decoder to output a sample in the decoded second audio associating with the determined presentation time stamp.

In another aspect of the invention, a second electronic device is disclosed. The second electronic device comprises first means and second means for respectively decoding a video and a second audio received by the second electronic device and outputting the decoded video and the decoded second audio, the second audio associated with a program comprising a video and the first audio and being played back by a first electronic device; means for capturing the video being played back by the first electronic device; correlator means for receiving the captured playback video and the decoded video from the first means; and processing means, wherein when the processing means receives a user command to synchronize playback of the second audio at the second electronic device with the playback of the video at the first electronic device, the processing means is configured to instruct the correlator means to determine an offset between the received captured video and the received decoded video outputted from the first means and instruct the second means to output the decoded second audio according to the offset. The second electronic device may comprise an input mechanism for a user to input the user command.

In one embodiment, the second electronic device further comprises a video player playing back the second audio by the second electronic device from a first position, which is a first time interval away from a beginning of the program in a normal playback of the program, wherein when the playback of the second audio is at the first position, the playback of the program at the first electronic device is at a second position, which is a second time interval away from the beginning of the program in a normal playback, and wherein a difference between the first time interval and the second time interval is within a predefined interval. The video player may position the playback of the second audio to the first position responsive to a user signal.

In another embodiment, if determining the offset fails, the processing means is configured to ask a user to input the user command again, and instruct the correlator means to determine the offset again.

3

In another embodiment, the processing means is configured to instruct the first means to adjust an output by outputting the decoded video according to the offset, so that outputs of the first means and the second means are synchronized.

In another embodiment, the video and the second audio are downloaded to the second electronic device before the second electronic device playing back the second audio. The program received by the first electronic device, and the video and the second audio received by the second electronic device are downloaded from a first source, or respectively from a second source and the first source.

In another embodiment, the processing means is configured to instruct the correlator means to determine a presentation time stamp associated with a frame in the decoded video, which corresponds a newly captured video according to the offset, and instruct the second means to output a sample in the decoded second audio associating with the determined presentation time stamp.

In all three aspects of the invention, the first electronic device may be one of a television receiver, a theater video reproduction device, and a computer.

## DETAILED DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:

FIG. 1 shows a system according to an exemplary embodiment of the present invention;
FIG. 2 shows more details of the STB 2, TV 3, and the mobile terminal 4 in the system shown in FIG. 1 according to an exemplary embodiment of the present invention;
FIG. 3 shows an exemplary user interface of a video player on the display 48 of the mobile terminal 4;
FIG. 4, shows an exemplary process 400 performed at the mobile terminal 4 for synchronizing the playback of the video at the TV 3 and playback of the second audio at the mobile terminal 4 according to an exemplary embodiment of the present invention; and
FIG. 5 shows an exemplary process 420 to synchronize the two playbacks in response to a user command to synchronize the playback of the video at the TV 3 and playback of the second audio at the mobile terminal 4 according to an exemplary embodiment of the present invention.

The exemplifications set out herein illustrate preferred embodiments of the invention, and such exemplifications are not to be construed as limiting the scope of the invention in any manner.

## DETAILED DESCRIPTION

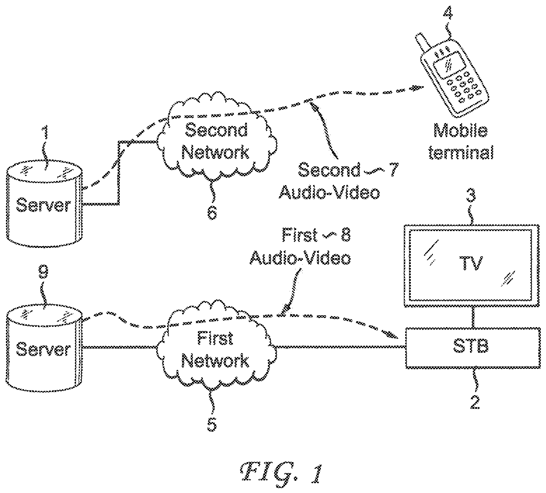

Referring now to the drawings, and more particularly to FIG. 1, a block diagram of a system compliant with an embodiment of the invention is shown. A first stream 8, which is an audio-video stream, such as a MPEG-2 Transport Stream, is transmitted by a video server 9 on the first network 5, which, for example, is a broadband network. The first stream 8 is received by the set-top box (STB) 2. The first stream 8 carrying a program including a first audio and an associated video and the program is being played back by the television (TV) 3 after the program has been processed by the STB 2. As known in the art, the STB 2 synchronizes the first audio with the video by using the synchronization signals embedded in the first stream 8. Thus, the playback of the video and the first audio at the TV 3 is synchronized.

The term "synchronization" as used herein means that the time difference between the audio and the video does not exceed 20 milliseconds (ms) if the audio is advanced with respect to the video or 40 ms if the audio is delayed with respect to the video.

Although the MPEG-2 encoding format is used as an example, encoding according to Digital Video Broadcasting (DVB), Digital Video Broadcasting-Handheld (DVB-H), Advanced Television Systems Committee - Mobile/Handheld (ATSC-M/H), and ATSC A/53 can be used as well.

Furthermore, the first stream 8 can be a broadcast program broadcast from a broadcast source via satellite, terrestrial, or cable. The first stream 8 can also be coming from a local drive, a network drive, or other storage devices accessible by the STB 2. Thus, in some embodiments, the first network 5 is not needed. The first stream 8 may represent an analog television signal as well. In one embodiment, the STB 2 may be integrated into the TV 3, so that the TV 3 performs both sets of functions.

A second stream 7 including the video and a second audio is transmitted by a video server 1 through a second network 6 to a mobile terminal 4. The second audio is associated with the video, which is the same video in the first stream 8. The second audio is different from the first audio. For example, the second audio carries a different language from the first audio. According to the principles of an embodiment of the invention, a user can watch the video on the TV 3 and listen to the second audio on the mobile terminal 4 with the two playbacks synchronized.

The second stream 7 is transmitted to the mobile terminal 4 upon demand and the second stream 7 includes the same video and a second audio. The first stream 8 can be broadcasted to the STB 2 or transmitted to the STB 2 upon demand.

The second network 6 can also be the Internet, a satellite network, a Wi-Fi network, or other data networks accessible wirelessly or with wire by the mobile terminal 4.

According to the embodiment, the second stream 7 can be distributed through a DVB-H network, an ATSC-M/H network or other networks supporting other encoding standards, as long as the mobile terminal 4 supports the encoding formats. The second stream 7 can also received from a storage device accessible by the mobile terminal 4, for example, a storage device connected to the mobile terminal 4 wirelessly or with wire, such as USB. Thus, in some embodiments, the second network 6 is not needed. Although illustrated as a mobile terminal, the mobile terminal 4 might be a device such as a cellular terminal, a tablet, a Wi-Fi receiver, a DVB-T terminal, a DVB-H terminal, and an ATSC-M/H terminal.

The STB 2 may be located in a public hot spot, which comprises one or more displays for presenting the video and one or more speakers for outputting the audible signal of the first audio. When in the public hot spot, an end user listens on a mobile terminal to an audio associated to the video displayed in the hot spot. According to principles of an embodiment of the invention, the audio played by the mobile terminal 4 is synchronized, utilizing a camera attached or included in the mobile terminal 4, with the video being played back by the STB 2. Different users in the hot spot watch the same video, but listening to different audio streams carrying, for example, different languages associated with that video.

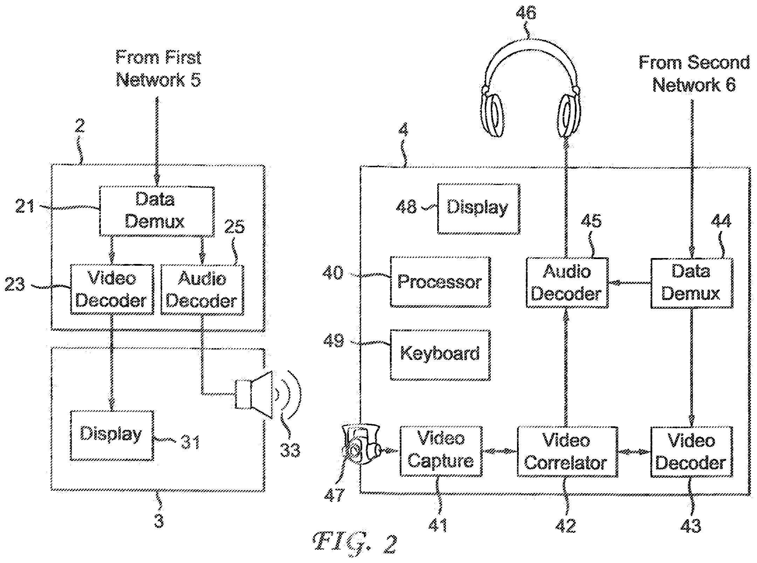

FIG. 2 illustrates more details of the STB 2, TV 3, and the mobile terminal 4. As indicated previously, the functions of the STB 2 may be integrated into the TV 3. The STB 2 includes a data demultiplexer 21, a video decoder 23, and an audio decoder 25. The TV 3 includes a display 31 and a loud speaker 33. The data demultiplexer 21 separates and outputs the first audio stream and the video stream from the first stream 8 received from the first network 5. As noted before, although the first stream 8 is illustrated as coming from a network, the first stream 8 may come from a local drive, a network drive, or other storage devices accessible by the STB 2. In another embodiment, the first steam 8 can be an analog signal, and the video decoder 23 and audio decoder 25 should be replaced by, for example, a video demodulator and a sound demodulator, respectively.

The video stream is then decoded by the video decoder 23. The decoded video signal is received by the TV 3 and displayed on the display 31. The audio decoder 25 decodes the first audio stream and outputs the decoded first audio signal to the TV 3. The TV 3 generates an audible output signal, the playback first audio signal, via the speaker 33 in response to the decoded audio signal.

The mobile terminal 4 in this embodiment includes a main processor 40, a video capture 41, a video correlator 42, a video decoder 43, a data multiplexer 44, an audio decoder 45, a speaker, such as headset or an ear phone 46, a camera 47, a display 48, and a keyboard 49. The main processor 40 is the main controller of the mobile terminal 4. Functions of some elements, such as the video capture 41, the video correlator 42, the video decoder 43, the data demultiplexer 44, and/or the audio decoder 45 may be integrated into the main processor 40.

In operation, the data demultiplexer 44 separates and extracts the video stream and the second audio stream from the second stream 7 received from the second network 6. The data demultiplexer 44 outputs the video stream and the second audio stream respectively to the video decoder 43 and the audio decoder 45. The video decoder 43 and the audio decoder 45 respectively produce decoded video and decoded second audio signals in response to the respective the video and second audio streams. The headset 46 renders the decoded second audio signal as an audible signal, the playback second audio signal.

The camera 47 receives the visible output signal from the display 31. The visible signal received by the camera 47 is digitized by the video capture 41, which is also serves as a buffer and transmits the digitized video signal to the video correlator 42. It is noted that both the digitized video and the decoded video signal represent the video but may not synchronize with each other.

The video correlator 42 determines an offset between the digitized video signal from the video capture 41 and the decoded video signal from the video decoder 43.

The video correlator 42 may determine the offset by comparing the digitized video signal from the video capture 41 with the decoded video signal from the video decoder 43 to find out a video frame in the digitized video signal, which corresponds to a video frame in the decoded video signal. Once correspondence is found, the offset can be derived by computing the number of frames between the currently outputted decoded frame for the video decoder 43 and the corresponding frame in the decoded video signal. The offset can be represented by number of frames or time interval. For example, for simplicity of illustration, we assume that each frame in the video stream is denoted by a number and the number of the next subsequent frame is denoted by the number of the frame plus 1. Now, if the digitized video signal from the video capture 41 is lagging behind the decoded video signal from the video decoder 43, the corresponding frame in the decoded video signal of a received digitized video frame should already exist in a buffer of the video correlator 42. Assuming that the corresponding frame is frame 3 and the currently outputted decode video frame is frame 7, the offset should be determined as -4 frame intervals. Thus, the output from the audio decoder 45 must be pulled back by four frames in order to be synchronized with the playback of the video at the TV3. The output of the video decoder 43 and the output of the audio decoder 45 are synchronized by using the embedded synchronization signals in the second stream 7, as known in the art.

Continuing the example above, if the digitized video signal from the video capture 41 is ahead of the decoded video signal from the video decoder 43, the corresponding frame in the decoded video signal of a received digitized video frame is not yet outputted from the video decoder 43. Assuming the currently outputted video frame from the video decoder 43 is frame 3 and the corresponding frame is frame 7, the offset should be determined as +4 frame interval. Thus, the output from the audio decoder 45 must be advanced by four frames in order to be synchronized with the playback of the video at the TV3.

As known in the art, one way to determine the corresponding frame in the video stream of a received digitized video frame is to calculate the peak signal to noise ratio or PSNR of each outputted decoded video frame from the video decoder 43 with respect to the received digitized video frame. The corresponding frame should be one that has the maximum PSNR.

The unit of the PSNR is decibels (dB) and can be calculated as follows:

$$PSNR = 20 \log_{10}\left(\frac{255}{\sqrt{MSE}}\right) \text{ with } MSE = \frac{\sum_{i=0}^{m}\sum_{j=0}^{n}[f(i,j) - F(i,j)]^2}{m \cdot n}$$

where

- m is the number of pixels in a video frame column,
- n is the number of pixels in a video frame line,
- f(i,j) is the value of the pixel of coordinates (i,j) of the video frame of a digitized video frame from the video capture 41, and
- F(i,j) is the value of the pixel of coordinates (i,j) of a decoded video frame from the video decoder 43.

Once the offset has been determined, the video correlator 42 informs the audio decoder 45 to retreat or advance the decoded second audio signal to the speaker 46 according to the offset, so that the playback of second audio at the mobile terminal 4 is synchronized with the playback of the video at the TV 3. Thus, the offset between the playback of the video at the first electronic device and playback of the second audio at the second electronic device is eliminated. Although in this embodiment, the decoded video signal is used as a reference for calculating the offset, the digitized video signal can be used as a reference as well resulting in the sign of the offset being reversed.

Instead of informing the audio decoder 45 the offset, the video correlator 42 may determine a presentation time stamp (PTS) of the decoded video signal which is synchronized with the digitized video signal most recently received according to the determined offset, inform the audio decoder 45 of the PTS, so that the audio decoder 45 can output the decoded second audio signal according to the determined PTS.

In order to reduce the time for the video correlator 42 for determining the offset and/or for reducing the sizes of the buffers (not shown) for storing the digitized video signal from the camera 31 and the decoded video signal, the actual offset between the digitized video signal and the decoded video signal should be less than a predetermined time, for example 10 seconds. This approach may also reduce the size of buffers (not shown) used in the video decoder 43 and the audio decoder 45.

According to the principles of an embodiment of the invention, a user of the mobile terminal 4 should determine the elapsed time of the playback of the video at the TV 3. This information may be indicated on the display 31 of the TV 3 as well known in the art or if the information is not shown on the display 31, the user can find out the starting time of the program from, for example, a program guide and compute the elapsed time using the current time. If the program is played back from a local drive, the user can easily compute the elapsed time by subtracting the playback start time from the current time. Once the user has determined the elapsed time of the video signal, the user should adjust the playback of the second audio at the mobile terminal 4 to a position having an elapsed time that is within the predetermined offset or time interval, preferably 10 seconds, of the determined elapsed time of the playback of the video at the TV 3. The user then instructs the mobile terminal 4 to synchronize the playback of the program at the TV 3 and the playback of the second audio at the mobile terminal 4 by activating an input mechanism, for example, pressing a particular key in the keyboard 49, a particular virtual key displayed on the display 48, or generating a particular gesture in front of the display 48 assuming that the main processor through the display 48 or another camera (not shown) other than the camera 47 is able to detect the particular gesture.

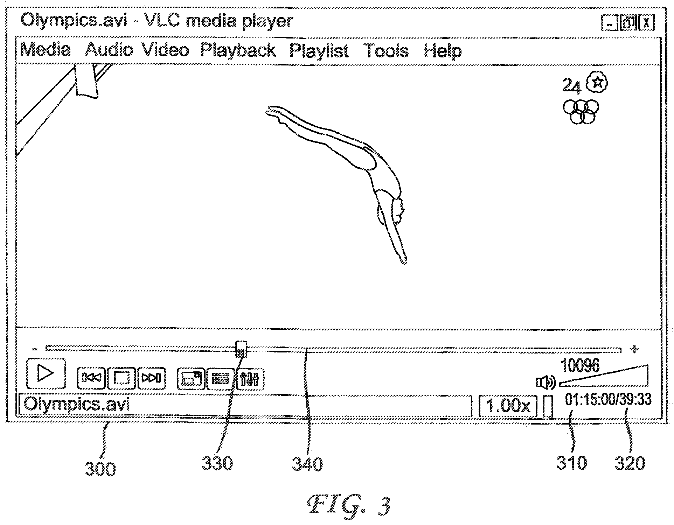

A user may start the playback of the second audio by selecting the second audio, for example, from a web browser on the mobile terminal 4. After the second audio has been selected, the mobile terminal 4 invokes an audio/video player 300, the user interface of which, for example, is shown in FIG. 3, and starts playing back the second audio or the combination of the second audio and the video automatically or in response to another user signal. As shown in FIG. 3, the status bar 340 shows the status of the playback. The current playing position is indicated by an indicator 330, the total time of the program is indicated by an indicator 310, and the remaining time is indicated by an indicator 320. Since the total time is indicated as 01:15:00 (one hour and 15 minutes) and the remaining time is indicated as 39:33 (39 minutes and 33 seconds), a user is able to determine the elapsed time as 35 minutes and 27 seconds. The user can adjust the playback position by dragging the indicator 330 to a desired position or click on the desired position in the status bar 340, as well known in the art. Based on the indicators 310 and 320, the user is able to adjust the playback of the second audio or the combination of the second audio and the video to be within the exemplary predefined offset of 10 seconds of the playback of the video at the TV 3.

As well known in the art, the user inputs can be coming from the keyboard 49 or the display 48 or both. The main processor 40 then instructs the video decoder 43 and the audio decoder 45 to execute the desired synchronization functions.

Once the user has selected the playback position at the mobile terminal 4, the user can input another signal via the keyboard 49 or the display 48 requesting the main processor 40 to synchronize the playback of the video at the TV 3 and the playback of the second video at the mobile terminal 4. Once the main processor 40 receives the user signal to synchronize the two playbacks, the main processor 40 activates or instructs the video capture 41 to capture the playback of the video at the TV 3 and the video correlator 42 to determine the offset or the desired PTS. The signal requesting the main processor 40 to synchronize may be generated by activating a special key in the keyboard 49, special virtual button on the display 48, or a particular hand gesture detectable by the process 40 via the touch-sensitive display 48 or another camera (not shown) other than the camera 47.

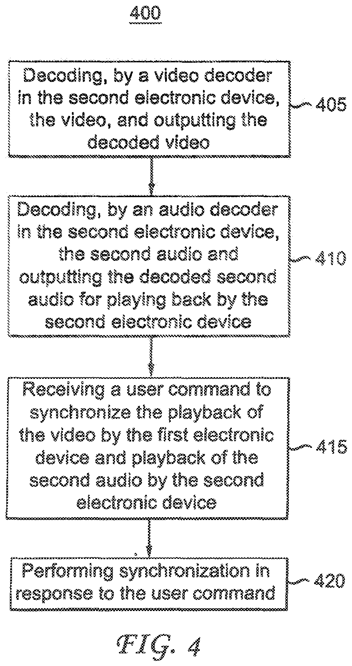

Referring to FIG. 4 an exemplary process 400 performed at the mobile terminal 4 for synchronizing the playback of the video at the TV 3 and playback of the second audio at the mobile terminal 4 is shown. The process 400 is illustrated using the embodiments shown in FIGs. 1-3. A first electronic device, illustratively the TV 3, is playing back a program including a video and associated first audio. The video and the first audio comprised of the program are components of the first stream 8. The first stream 8 may be in analog form. It is assumed that in the playback of the program at the first electronic device, the first audio and the video are synchronized. This is the case, as well known in the art using synchronizing signals embedded in the first stream 8. The first electronic device can be a theater video reproduction device or a computer as well.

A second electronic device, illustratively the mobile terminal 4, is playing back a second audio associated with the program. The second electronic device also receives and decodes the video. The video and the second audio received by the second electronic device are components of the second stream 7. Although illustrated as a mobile terminal, the second electronic device may be any electronic device that is able to receive the playback of the video at the first electronic device.

If the main processor 40 performs the functions of the video capture 41, the video correlator 42, the video decoder 43, and/or the audio decoder 45, the process 400 is performed by the main processor 40. However, those components still exist albeit inside the main processor 40.

At step 405, the main processor 40 is operative or configured to invoke or instruct the video decoder 43 to decode the video and output the decoded video. The video decoder 43 should have an output buffer, so that the video decoder 43 can select which frame in the output buffer to be outputted to the video correlator 42.

At step 410, the main processor 40 is operative or configured to invoke or instruct the audio decoder 45 to decode the second audio and output the decoded second audio for playing back by the second electronic device. The audio decoder 45 should have an output buffer, so that the audio decoder 45 can select which sample in the output buffer to be outputted to the headset 46 for playback.

At step 415, the main processor 40 is operative or configured to receive a user command to synchronize the playback of the video at the first electronic device and the playback of the second audio at the second electronic device. The user input is generated from activating an input mechanism, which may be a particular icon displayed on the display 46, a particular user gesture in front of the display 46, or a particular key on the keyboard 49.

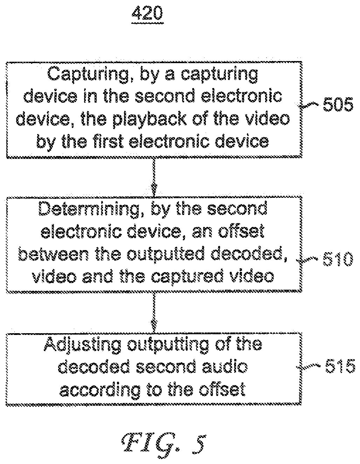

Responsive to the user command to synchronize, the main processor 40 cooperating with other elements at step 420 is operative or configured to synchronize the two playbacks. An illustrative process flow of step 420 is shown in FIG. 5.

At step 505, the main processor 40 is operative or configured to invoke or instruct the video capture 41 to capture, by a capturing device of the second electronic device, such as the camera 47, the playback of the video at the first electronic device. The main processor 40 at step 510 is also operative or configured to invoke or instruct the video correlator 42 to determine an offset between the decoded video from video decoder 43 in the mobile terminal 4 and the captured video, which is digitized by the video capture 41. The main processor 40 is then operative or configured to invoke or instruct the audio decoder 45 to adjust playback of the second audio by adjusting outputting decoded second audio according to the offset, so that playback of the video at the first electronic device is synchronized with playback of the second audio at the second electronic device. Since the playback of the first audio and the video at TV 3 is synchronized, and the playback of the video at the TV 3 and the playback of the second audio at the mobile terminal 4 are synchronized, the playback of the video at the TV 3 and the playback of the second audio at the mobile terminal 4 are also synchronized.

It is noted that the main processor 40 cooperating with other components, such as the audio decoder 45 and a video player (not shown), the user interface of which may be shown as in FIG. 3, is operative or configured to play back the second audio from a first position, which is a first time interval away from a beginning of the program in a normal playback of the program, wherein when the playback of the second audio is at the first position, the playback of the program at the first electronic device is at a second position, which is a second time interval away from the beginning of the program in a normal playback, and wherein a difference between the first time interval and the second time interval is within a predefined interval.

The predefined interval can be user adjustable and preferably is 10 seconds (300 frame intervals if the frame rate is 30 frames/second) or less, so that the synchronization can be achieved quickly. As discussed previously with respect to FIG. 3, a user can adjust or position the playback of the second audio to start from the first position through a user signal. In response to the user signal, the main processor 40 is operative or configured to instruct the audio decoder 45 to adjust the output of the decoded second audio by, for example, outputting the sample in the decoded second audio corresponding to the first position.

In the case that the server providing the second audio to the mobile terminal 4 knows the position of the video transmitted to the STB 2, the server providing the second audio can determine a position in the second audio that corresponds to the current position of the video transmitted and transmit the second audio from the corresponding position in response to a user input to the server, for example, activating an icon on the server web site. As such, positioning the first position can be done at the mobile terminal 4 or at the server transmitting the second audio.

In one embodiment, if the difference between the first time interval and the second time interval is more than the predefined interval, the main processor 40 is operative or configured to ask the user to adjust the first position in response to the user command to synchronize the two playbacks.

In another embodiment, if the step of determining the offset fails, the main processor 40 is operative or configured to ask a user to input the user command to synchronize the two playbacks again and the steps of capturing and determining the offset are repeated.

According to the principles of an embodiment of the invention, when the decoded second audio output to the headset 46 from the audio decoder 45 is adjusted to the first position, the output of the video decoder 43 is automatically adjusted to be synchronized with the output of the audio decoder 45, so that the output frame in the decoded video also corresponds to the first position. As such, outputs of the video decoder 43 and the audio decoder are synchronized. That is, the output samples from the audio decoder 45 correspond to the output frames from the video decoder 43. For example, the PTS associated with the current output frame from the video decoder 43 and the PTS associated with the current output sample from the audio decoder 45 are the same.

As such, the main processor 40 may instruct the video decoder 43 to adjust its output by outputting the decoded video according to the offset, so that outputs of the video decoder 43 and the audio decoder 45 are synchronized.

In another embodiment, the main processor 40 may instruct the video decoder 43 to synchronize with the audio decoder 45 in response to receipt of an occurrence of the user command to synchronize the playback of the video at the first electronic device and the playback of the second audio at the second electronic device.

An advantage of synchronizing the outputs of the video decoder 43 and the audio decoder 45 is that a user may send the user command to synchronize the playback of the video at the first electronic device and the playback of the second audio at the second electronic device at any time and the two decoders would be ready to perform the synchronization according to the present embodiments of the invention.

In another embodiment, the video and the second audio are pre-downloaded to the mobile terminal 4 before the mobile terminal 4 playing back the second audio. In one embodiment, playing back of the second audio may include playing back of the video received by the mobile terminal 4.

In one embodiment, the video and the second audio can be downloaded to the second electronic device from the same source, for example, the same web site of a service provider that transmits the program to the first electronic device. In another embodiment, the second audio may be downloaded from a different source from the source transmitting the program to the first electronic device. For example, the program received by the STB 2 is received from a broadcast source for a service provider and the second audio received by the second electronic device is downloaded from a web site sponsored by the service provider.

In fact, when the bandwidth of receiving the second audio by the second electronic device is too small, a user can switch to another source for receiving the second audio. This may happen when the user selects a streaming source that has a very low bandwidth and the user is unable to adjust the playback of the second audio to the first position.

In another embodiment, the main processor 40 is operative or configured to instruct the video correlator 42 to determine a PTS according to the offset and provide a PTS to the audio decoder 45 and the audio decoder 45 should output from a decoded sample associated with the PTS. In another embodiment, the main processor 40 is operative or configured to instruct the video correlator 42 to provide the same PTS to the video decoder 43, so that the video decoder 43 should output from a decoded frame associated the PTS. The video correlator 42 once determines the offset can determines the PTS as follows: determining a decoded video frame from the video decoder 43 that should correspond to the next received captured video frame and determining the PTS of the corresponding decoded video frame as the desired PTS.

Although the camera 47 is used as an example for the capturing device for capturing the playback video from the display 31 of the TV 3, the capturing device may be a wireless receiver, such as a Bluetooth receiver at the mobile terminal 4 and the captured video signal is simply the decoded video signal from the video decoder 23 from the STB 2 transmitted wirelessly to the wireless terminal 4.

This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

**Claims**

1. A method (400) for synchronizing playback of a program including a video and associated first audio at a first electronic device with playback of a second audio associated with the program at a second electronic device that also receives the video, the method comprising:

   decoding (405), by a video decoder in the second electronic device, the video, and outputting the decoded video;
   decoding (410), by an audio decoder in the second electronic device, the second audio and outputting the decoded second audio for playing back by the second electronic device;
   receiving (415) a user command to synchronize the playback of the video at the first electronic device and playback of the second audio at the second electronic device;
   responsive to the user command, the method further comprising:

      capturing (505), by a capturing device in the second electronic device, the playback of the video at the first electronic device;
      determining (510), by the second electronic device, an offset between the outputted decoded video and the captured video; and
      adjusting (520) outputting of the decoded second audio according to the offset, so that the playback of the first audio at the first electronic device is synchronized with the playback of the second audio at the second electronic device.

2. The method (400) of claim 1, further comprising playing back the second audio by the second electronic device from a first position, which is a first time interval away from a beginning of the program in a normal playback of the program, wherein when the playback of the second audio is at the first position, the playback of the program by the first electronic device is at a second position, which is a second time interval away from the beginning of the program in a normal playback, and wherein a difference between the first time interval and the second time interval is within a predefined interval.

3. The method (400) of claim 2, further comprising positioning the playback of the second audio to the first position responsive to a user signal.

4. The method (400) of claim 1, wherein if determining the offset fails, a user is asked to input the user command again, and capturing and determining the offset are repeated.

5. The method (400) of claim 1, further comprising adjusting, by the video decoder, an output by outputting the decoded video according to the offset, so that outputs of the video decoder and the audio decoder are synchronized.

6. The method (400) of claim 1, further comprising downloading the video and the second audio to the second electronic device before playing back the second audio by the second electronic device.

7. The method (400) of claim 1, wherein the user command is generated by a user activating an input mechanism.

8. The method (400) of claim 1, further comprising determining a presentation time stamp associated with a frame in the decoded video, which corresponds a newly captured video frame according to the offset, and adjusting playback of the second audio comprising outputting a sample in the decoded second audio associated with the determined presentation time stamp.

9. A second electronic device (4) comprising:

a video decoder (43) and an audio decoder (45) for respectively decoding a video and a second audio received by the second electronic device (4) and outputting the decoded video and the decoded second audio, the second audio associated with a program comprising the video and a first audio and being played back by a first electronic device (3);
a video capturing device (41) for capturing the video being played back by the first electronic device (3);
a video correlator (42) receiving the captured playback video and the decoded video from the video decoder (43); and
a processor (40), wherein when the processor (40) receives a user command to synchronize playback of the second audio at the second electronic device (4) with the playback of the video at the first electronic device (3), the processor (40) is configured to instruct the video correlator (42) to determine an offset between the received captured video and the received decoded video outputted from the video decoder (43) and instruct the audio decoder (45) to output the decoded second audio according to the offset.

10. The second electronic device (4) of claim 9, further comprising a video player playing back the second audio by the second electronic device (4) from a first position, which is a first time interval away from a beginning of the program in a normal playback of the program, wherein when the playback of the second audio is at the first position, the playback of the program at the first electronic device (3) is at a second position, which is a second time interval away from the beginning of the program in a normal playback, and wherein a difference between the first time interval and the second time interval is within a predefined interval.

11. The second electronic device (4) of claim 10, wherein the video player positions the playback of the second audio to the first position responsive to a user signal.

12. The second electronic device (4) of claim 9, wherein if determining the offset fails, the processor (40) is configured to ask a user to input the user command again, and instruct the video correlator (42) to determine the offset again.

13. The second electronic device (4) of claim 9, wherein the processor (40) is configured to instruct the video decoder (43) to adjust an output by outputting the decoded video according to the offset, so that outputs of the video decoder (43) and the second audio decoder (45) are synchronized.

14. The second electronic device (4) of claim 9, wherein the video and the second audio are downloaded to the second electronic device (4) before the second electronic device (4) playing back the second audio.

15. The second electronic device (4) of claim 9, further comprising an input mechanism (48, 49) for a user to input the user command.

**Patentansprüche**

1. Verfahren (400) zum Synchronisieren der Wiedergabe eines Programms, das ein Videosignal und ein zugeordnetes erstes Audiosignal enthält, bei einer ersten elektronischen Vorrichtung mit der Wiedergabe eines zweiten Audiosignals, das dem Programm zugeordnet ist, bei einer zweiten elektronischen Vorrichtung, die das Videosignal ebenfalls empfängt, wobei das Verfahren umfasst:

Decodieren (405) des Videosignals durch einen Videodecodierer in der zweiten elektronischen Vorrichtung und Ausgeben des decodierten Videosignals;
Decodieren (410) des zweiten Audiosignals durch einen Audiodecodierer in der zweiten elektronischen Vorrichtung und Ausgeben des decodierten zweiten Audiosignals zum Wiedergeben durch die zweite elektronische Vorrichtung;

Empfangen (415) eines Nutzerbefehls zum Synchronisieren der Wiedergabe des Videosignals bei der ersten elektronischen Vorrichtung und der Wiedergabe des zweiten Audiosignals bei der zweiten elektronischen Vorrichtung;

wobei das Verfahren in Ansprechen auf den Nutzerbefehl ferner umfasst:

Erfassen (505) der Wiedergabe des Videosignals bei der ersten elektronischen Vorrichtung durch eine Erfassungsvorrichtung in der zweiten elektronischen Vorrichtung;

Bestimmen (510) eines Versatzes zwischen dem ausgegebenen decodierten Videosignal und dem erfassten Videosignal durch die zweite elektronische Vorrichtung; und

Anpassen (520) des Ausgebens des decodierten zweiten Audiosignals in Übereinstimmung mit dem Versatz in der Weise, dass die Wiedergabe des ersten Audiosignals bei der ersten elektronischen Vorrichtung mit der Wiedergabe des zweiten Audiosignals bei der zweiten elektronischen Vorrichtung synchronisiert wird.

2. Verfahren (400) nach Anspruch 1, das ferner das Wiedergeben des zweiten Audiosignals durch die zweite elektronische Vorrichtung von einer ersten Stelle, die von einem Anfang des Programms in einer normalen Wiedergabe des Programms ein erstes Zeitintervall entfernt ist, umfasst, wobei die Wiedergabe des Programms durch die erste elektronische Vorrichtung bei einer zweiten Stelle ist, die von dem Anfang des Programms in einer normalen Wiedergabe ein zweites Zeitintervall entfernt ist, wenn die Wiedergabe des zweiten Audiosignals bei der ersten Stelle ist, und wobei eine Differenz zwischen dem ersten Zeitintervall und dem zweiten Zeitintervall innerhalb eines im Voraus definierten Intervalls liegt.

3. Verfahren (400) nach Anspruch 2, das ferner das Positionieren der Wiedergabe des zweiten Audiosignals an die erste Stelle in Ansprechen auf ein Nutzersignal umfasst.

4. Verfahren (400) nach Anspruch 1, wobei ein Nutzer gebeten wird, den Nutzerbefehl erneut einzugeben, und das Erfassen und das Bestimmen des Versatzes wiederholt werden, wenn das Bestimmen des Versatzes misslingt.

5. Verfahren (400) nach Anspruch 1, das ferner das Anpassen einer Ausgabe durch Ausgeben des decodierten Videosignals in Übereinstimmung mit dem Versatz durch den Videodecodierer in der Weise umfasst, dass Ausgaben des Videodecodierers und des Audiodecodierers synchronisiert werden.

6. Verfahren (400) nach Anspruch 1, das ferner das Herunterladen des Videosignals und des zweiten Audiosignals in die zweite elektronische Vorrichtung, bevor das zweite Audiosignal durch die zweite elektronische Vorrichtung wiedergegeben wird, umfasst.

7. Verfahren (400) nach Anspruch 1, wobei der Nutzerbefehl dadurch erzeugt wird, dass ein Nutzer einen Eingabemechanismus aktiviert.

8. Verfahren (400) nach Anspruch 1, das ferner das Bestimmen eines einem Einzelbild in dem decodierten Videosignal zugeordneten Darstellungszeitstempels umfasst, der einem neu erfassten Videoeinzelbild in Übereinstimmung mit dem Versatz entspricht, und wobei das Anpassen der Wiedergabe des zweiten Audiosignals das Ausgeben einer Probe in dem decodierten zweiten Audiosignal, die dem bestimmten Darstellungszeitstempel zugeordnet ist, umfasst.

9. Zweite elektronische Vorrichtung (4), die umfasst:

einen Videodecodierer (43) und einen Audiodecodierer (45) um ein Videosignal bzw. ein zweites Audiosignal, die durch die zweite elektronische Vorrichtung (4) empfangen werden, zu decodieren und das decodierte Videosignal und das decodierte zweite Audiosignal auszugeben, wobei das zweite Audiosignal einem Programm zugeordnet ist, das das Videosignal und ein erstes Audiosignal umfasst und das durch eine erste elektronische Vorrichtung (3) wiedergegeben wird;

eine Videoerfassungsvorrichtung (41) zum Erfassen des Videosignals, das durch die erste elektronische Vorrichtung (3) wiedergegeben wird;

einen Videokorrelator (42), der das erfasste Wiedergabevideosignal und das decodierte Videosignal von dem Videodecodierer (43) empfängt; und

einen Prozessor (40), wobei der Prozessor (40) dafür konfiguriert ist, den Videokorrelator (42) anzuweisen, einen Versatz zwischen dem empfangenen erfassten Videosignal und dem empfangenen decodierten Videosignal, das von dem Videodecodierer (43) ausgegeben wird, zu bestimmen und den Audiodecodierer (45) anzuweisen, das decodierte zweite Audiosignal in Übereinstimmung mit dem Versatz auszugeben, wenn der Prozessor (40) einen Nutzerbefehl zum Synchronisieren der Wiedergabe des zweiten Audiosignals bei der zweiten elektronischen Vorrichtung (4) mit der Wiedergabe des Videosignals bei der ersten elektronischen Vorrichtung (3) empfängt.

10. Zweite elektronische Vorrichtung (4) nach Anspruch 9, die ferner einen Videoplayer umfasst, der das zweite Audiosignal durch die zweite elektronische Vorrichtung (4) von einer ersten Stelle wiedergibt, die von einem Anfang des Programms in einer normalen Wiedergabe des Programms ein erstes Zeitintervall entfernt ist, wobei die Wiedergabe des Programms bei der ersten elektronischen Vorrichtung (3) bei einer zweiten Stelle ist, die von dem Anfang des Programms in einer normalen Wiedergabe ein zweites Zeitintervall entfernt ist, wenn die Wiedergabe des zweiten Audiosignals bei der ersten Stelle ist, und wobei eine Differenz zwischen dem ersten Zeitintervall und dem zweiten Zeitintervall innerhalb eines im Voraus definierten Intervalls liegt.

11. Zweite elektronische Vorrichtung (4) nach Anspruch 10, wobei der Videoplayer die Wiedergabe des zweiten Audiosignals in Ansprechen auf ein Nutzersignal an die erste Stelle positioniert.

12. Zweite elektronische Vorrichtung (4) nach Anspruch 9, wobei der Prozessor (40) dafür konfiguriert ist, einen Nutzer zu bitten, den Nutzerbefehl erneut einzugeben, und den Videokorrelator (42) anzuweisen, den Versatz erneut zu bestimmen, falls die Bestimmung des Versatzes misslingt.

13. Zweite elektronische Vorrichtung (4) nach Anspruch 9, wobei der Prozessor (40) dafür konfiguriert ist, den Videoplayer (43) anzuweisen, eine Ausgabe durch Ausgeben des decodierten Videosignals in Übereinstimmung mit dem Versatz in der Weise anzupassen, dass Ausgaben des Videodecodierers (43) und des zweiten Audiodecodierers (45) synchronisiert werden.

14. Zweite elektronische Vorrichtung (4) nach Anspruch 9, wobei das Videosignal und das zweite Audiosignal in die zweite elektronische Vorrichtung (4) heruntergeladen werden, bevor die zweite elektronische Vorrichtung (4) das zweite Audiosignal wiedergibt.

15. Zweite elektronische Vorrichtung (4) nach Anspruch 9, die ferner einen Eingabemechanismus (48, 49) für einen Nutzer zum Eingeben des Nutzerbefehls umfasst.

**Revendications**

1. Procédé (400) de synchronisation de la lecture d'un programme incluant une vidéo et un premier audio associé au niveau d'un premier dispositif électronique et la lecture d'un deuxième audio associé au programme au niveau d'un deuxième dispositif électronique recevant également la vidéo, le procédé comprenant :

   le décodage (405), par un décodeur vidéo dans le deuxième dispositif électronique, de la vidéo, et la sortie de la vidéo décodée ;
   le décodage (410), par un décodeur audio dans le deuxième dispositif électronique, du deuxième audio, et la sortie du deuxième audio décodé pour lecture par le deuxième dispositif électronique ;
   la réception (415) d'une commande utilisateur pour synchroniser la lecture de la vidéo au niveau du premier dispositif électronique et la lecture du deuxième audio au niveau du deuxième dispositif électronique ;

   en réponse à la commande utilisateur, le procédé comprenant en outre :

   la capture (505), par un dispositif de capture dans le deuxième dispositif électronique, de la lecture de la vidéo au niveau du premier dispositif électronique ;
   la détermination (510), par le deuxième dispositif électronique, d'un décalage entre la vidéo décodée sortie et la vidéo capturée ; et
   le réglage (520) de la sortie du deuxième audio décodé en fonction du décalage, de sorte que la lecture du premier audio au niveau du premier dispositif électronique soit synchronisée avec la lecture deuxième audio au niveau du deuxième dispositif électronique.

2. Procédé (400) selon la revendication 1, comprenant en outre la lecture du deuxième audio par le deuxième dispositif électronique à partir d'une première position, qui se trouve à un premier intervalle de temps du début du programme en lecture normale du programme, dans lequel lorsque la lecture du deuxième audio est à la première position, la lecture du programme par le premier dispositif électronique est à une deuxième position, qui se trouve à un deuxième intervalle de temps du début du programme en lecture normale, et dans lequel une différence entre le premier intervalle de temps et le deuxième intervalle de temps se situe dans un intervalle prédéfini.

3. Procédé (400) selon la revendication 2, comprenant en outre le positionnement de la lecture du deuxième audio à la première position en réponse à un signal de l'utilisateur.

4. Procédé (400) selon la revendication 1, dans lequel si la détermination du décalage échoue, l'utilisateur est invité à entrer à nouveau la commande utilisateur, et la capture et la détermination du décalage sont répétées.

5. Procédé (400) selon la revendication 1, comprenant en outre le réglage, par le décodeur vidéo, d'une sortie en sortant la vidéo décodée en fonction du décalage, de sorte que les sorties du décodeur vidéo et du décodeur audio soient synchronisées.

6. Procédé (400) selon la revendication 1, comprenant en outre le téléchargement de la vidéo et du deuxième audio sur le deuxième dispositif électronique avant la lecture du deuxième audio par le deuxième dispositif électronique.

7. Procédé (400) selon la revendication 1, dans lequel la commande utilisateur est générée par un utilisateur qui active un mécanisme d'entrée.

8. Procédé (400) selon la revendication 1, comprenant en outre la détermination d'un horodatage de présentation associé à une trame dans la vidéo décodée, qui correspond à une nouvelle trame vidéo capturée en fonction du décalage et le réglage de la lecture du deuxième audio comprenant la sortie d'un échantillon dans le deuxième audio décodé associé à l'horodatage de présentation déterminé.

9. Deuxième dispositif électronique (4) comprenant :

   un décodeur vidéo (43) et un décodeur audio (45) pour respectivement décoder une vidéo et un deuxième audio reçus par le deuxième dispositif électronique (4) et sortir la vidéo décodée et le deuxième audio décodé, le deuxième audio associé à un programme comprenant la vidéo et un premier audio et étant lu par un premier dispositif électronique (3) ;
   un dispositif de capture vidéo (41) pour capturer la vidéo lue par le premier dispositif électronique (3) ;
   un corrélateur vidéo (42) recevant la vidéo en lecture capturée et la vidéo décodée du décodeur vidéo (43) ; et
   un processeur (40), dans lequel le processeur (40) reçoit une commande utilisateur pour synchroniser la lecture du deuxième audio au niveau du deuxième dispositif électronique (4) avec la lecture de la vidéo au niveau du premier dispositif électronique (3), le processeur (40) est configuré pour indiquer au corrélateur vidéo (42) de déterminer un décalage entre la vidéo capturée reçue et la vidéo décodée reçue du décodeur vidéo (43) et indiquer au décodeur audio (45) de sortir le deuxième audio décodé en fonction du décalage.

10. Deuxième dispositif électronique (4) selon la revendication 9, comprenant en outre un lecteur vidéo pour la lecture du deuxième audio par le deuxième dispositif électronique (4) à partir d'une première position, qui se trouve à un premier intervalle de temps du début du programme en lecture normale du programme, dans lequel lorsque la lecture du deuxième audio est à la première position, la lecture du programme au niveau du premier dispositif électronique (3) est à une deuxième position, qui se trouve à un deuxième intervalle de temps du début du programme en lecture normale et dans lequel une différence entre le premier intervalle de temps et le deuxième intervalle de temps se situe dans un intervalle prédéfini.

11. Deuxième dispositif électronique (4) selon la revendication 10, dans lequel le lecteur vidéo positionne la lecture du deuxième audio à la première position en réponse à un signal de l'utilisateur.

12. Deuxième dispositif électronique (4) selon la revendication 9, dans lequel si la détermination du décalage échoue, le processeur (40) est configuré pour inviter un utilisateur à entrer à nouveau la commande utilisateur et indiquer au corrélateur vidéo (42) de déterminer à nouveau le décalage.

13. Deuxième dispositif électronique (4) selon la revendication 9, dans lequel le processeur (40) est configuré pour indiquer au décodeur vidéo (43) de régler une sortie en sortant la vidéo décodée en fonction du décalage, de sorte que les sorties du décodeur vidéo (43) et du décodeur du deuxième audio (45) soient synchronisées.

14. Deuxième dispositif électronique (4) selon la revendication 9, dans lequel la vidéo et le deuxième audio sont téléchargés sur le deuxième dispositif électronique (4) avant que le deuxième dispositif électronique (4) lise le deuxième audio.

15. Deuxième dispositif électronique (4) selon la revendication 9, comprenant en outre un mécanisme d'entrée (48, 49) permettant à un utilisateur d'entrer la commande utilisateur.

*FIG. 1*

*FIG. 2*

EP 3 100 457 B1

*FIG. 3*

400

```
┌─────────────────────────┐
│  Decoding, by a video decoder │
│  in the second electronic device, │ ～405
│  the video, and outputting the │
│      decoded video       │
└─────────────────────────┘
             │
             ▼
┌─────────────────────────┐
│  Decoding, by an audio decoder │
│  in the second electronic device, │
│     the second audio and     │ ～410
│  outputting the decoded second │
│    audio for playing back by the │
│    second electronic device   │
└─────────────────────────┘
             │
             ▼
┌─────────────────────────┐
│   Receiving a user command to  │
│   synchronize the playback of  │
│  the video by the first electronic │ ～415
│   device and playback of the   │
│    second audio by the second  │
│      electronic device      │
└─────────────────────────┘
             │
             ▼
┌─────────────────────────┐
│ Performing synchronization in │ ～420
│ response to the user command │
└─────────────────────────┘
```

*FIG. 4*

420

```
┌─────────────────────────┐
│   Capturing, by a capturing   │
│  device in the second electronic │ ~ 505
│  device, the playback of the video │
│   by the first electronic device  │
└─────────────────────────┘
            │
            ▼
┌─────────────────────────┐
│    Determining, by the second   │
│     electronic device, an offset  │
│  between the outputted decoded,  │ ~ 510
│    video and the captured video  │
└─────────────────────────┘
            │
            ▼
┌─────────────────────────┐
│   Adjusting outputting of the   │
│     decoded second audio     │ ~ 515
│     according to the offset    │
└─────────────────────────┘
```

*FIG. 5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012049223 A2